(19) Europäisches Patentamt

European Patent Office

Office européen des brevets

(11) **EP 3 637 048 A1**

(12) # EUROPEAN PATENT APPLICATION
published in accordance with Art. 153(4) EPC

(43) Date of publication:
**15.04.2020 Bulletin 2020/16**

(21) Application number: **18831115.3**

(22) Date of filing: **28.03.2018**

(51) Int Cl.:
*G01C 7/04* (2006.01)     *G01C 15/00* (2006.01)

(86) International application number:
**PCT/JP2018/012928**

(87) International publication number:
**WO 2019/012751 (17.01.2019 Gazette 2019/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2017 JP 2017138004**

(71) Applicant: **Mitsubishi Electric Corporation
Chiyoda-ku
Tokyo 100-8310 (JP)**

(72) Inventors:
• **HINO, Momoyo**
  **Tokyo 100-8310 (JP)**
• **MAEHARA, Hideaki**
  **Tokyo 100-8310 (JP)**
• **TAIRA, Kenji**
  **Tokyo 102-0073 (JP)**
• **KATO, Sumio**
  **Tokyo 102-0073 (JP)**

(74) Representative: **Pfenning, Meinig & Partner mbB
Patent- und Rechtsanwälte
Theresienhöhe 11a
80339 München (DE)**

(54) **DATA THINNING DEVICE, SURVEYING DEVICE, SURVEYING SYSTEM, AND DATA THINNING METHOD**

(57) The present invention is provided with: a coordinates calculation unit (161) that, on the basis of data related to distance measurement points (P) indicating the distance to and the angle of a respective plurality of distance measurement points (P) and the coordinates of a laser beam irradiation reference point, and on the basis of the attitude angle of an aircraft (2), calculates coordinates of each of the distance measurement points (P) on a corresponding image among a plurality of images; a feature point extraction unit (162) that extracts feature points for each of the images; a distance calculation unit (163) that calculates, for each of the distance measurement points (P), the distance to a nearby feature point among the feature points extracted by the feature point extraction unit (162) on the basis of the coordinates calculated in the corresponding image by the coordinates calculation unit (161); and a necessity determination unit (166) that deletes unnecessary data from the data related to the distance measurement points (P) on the basis of the calculation result by the distance calculation unit (163).

FIG. 3

**EP 3 637 048 A1**

**Description**

TECHNICAL FIELD

The present invention relates to a data thinning device, a surveying device, a surveying system, and a data thinning method for thinning out data used for estimating an attitude of a moving body.

BACKGROUND ART

In a surveying system, a distance measuring device and a camera are mounted on a moving body, and the absolute position of each distance measurement point is obtained using the measurement result and the attitude of the moving body. At this time, the attitude of the moving body is acquired by an inertial measurement unit (IMU).
However, the IMU is very expensive and relatively heavy, and the types of moving bodies into which the IMU can be incorporated are limited. In order to solve this problem, there has been proposed a navigation device that accurately estimates the attitude of a moving body without using an IMU and a stabilizer (for example, see Patent Literature 1).

CITATION LIST

PATENT LITERATURES

Patent Literature 1: Japanese Patent No. 6029794

SUMMARY OF INVENTION

TECHNICAL PROBLEM

Patent Literature 1 proposes a navigation device that accurately estimates the attitude of a moving body without using an IMU and a stabilizer. Specifically, the attitude of the moving body is calculated by bundle calculation using data related to distance measurement points and a result of template matching between a plurality of images.
However, this navigation device has a problem that the calculation amount of bundle calculation increases as the number of irradiation points of laser beam increases, which leads to an increase in processing time, and that the accuracy in estimating the attitude is decreased depending on some distance measurement points.
The present invention has been made to solve the above-described problems, and an object thereof is to provide a data thinning device capable of thinning data used for estimating the attitude of a moving body.

SOLUTION TO PROBLEM

The data thinning device according to the present invention is provided with: a coordinate calculation unit for, on the basis of data which is related to a plurality of distance measurement points and which indicates distances to and angles of the respective distance measurement points measured by a distance measuring device mounted in a moving body using a laser beam and indicates coordinates of an irradiation reference point of the laser beam measured by a coordinate measuring device mounted in the moving body, and on the basis of an attitude angle of the moving body, calculating coordinates of each of the distance measurement points on a corresponding image among a plurality of images obtained in such a way that an area including the distance measurement points is periodically shot by a shooting device mounted in the moving body; a feature point extraction unit for extracting feature points for each of the images; a distance calculation unit for calculating, for each of the distance measurement points, in the corresponding image, a distance to a nearby feature point among the feature points extracted by the feature point extraction unit, on the basis of the coordinates calculated by the coordinate calculation unit; and a necessity determination unit for deleting unnecessary data from the data related to the distance measurement points on the basis of the calculation result by the distance calculation unit.

ADVANTAGEOUS EFFECTS OF INVENTION

According to the present invention, because of the configuration described above, it is possible to thin out data used for estimating the attitude of a moving body.

BRIEF DESCRIPTION OF DRAWINGS

FIG. 1 is a block diagram showing a configuration example of a surveying system according to a first embodiment of the present invention.

FIGS. 2A to 2D are views schematically showing the positional relationship among a distance measuring device, a left camera, and a right camera according to the first embodiment of the present invention, in which FIG. 2A is a perspective view of an aircraft in which the distance measuring device, the left camera, and the right camera are mounted, FIG. 2B is a view of the aircraft as viewed in an X-axis direction, FIG. 2C is a view of the aircraft as viewed in a Z-axis direction, and FIG. 2D is a view of the aircraft as viewed in a Y-axis direction.

FIG. 3 is a block diagram showing a functional configuration example of the data thinning device according to the first embodiment of the present invention.

FIGS. 4A and 4B are block diagrams each showing a hardware configuration example of the data thinning device according to the first embodiment of the present invention.

FIG. 5 is a flowchart showing an operation example of the data thinning device according to the first embodiment of the present invention.

DESCRIPTION OF EMBODIMENT

An embodiment of the present invention will now be described in detail with reference to the drawings.

First Embodiment

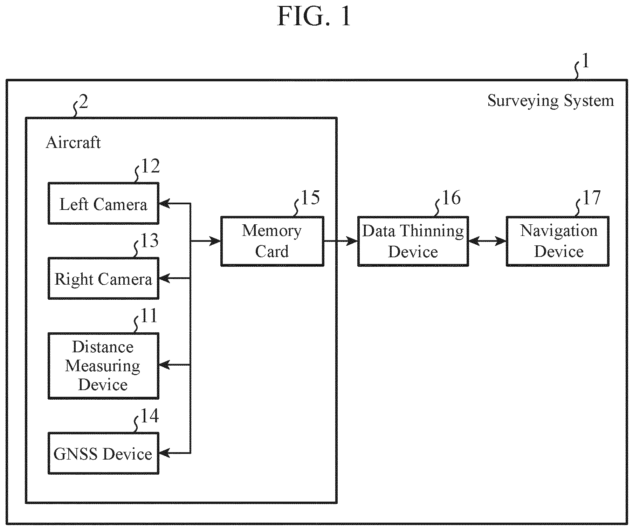

FIG. 1 is a block diagram showing a configuration example of a surveying system 1 according to the first embodiment of the present invention.

The surveying system 1 surveys geographical features. As shown in FIG. 1, the surveying system 1 includes a distance measuring device 11, a left camera 12, a right camera 13, a GNSS device (coordinate measuring device) 14, a memory card (storage device) 15, a data thinning device 16, and a navigation device 17. The distance measuring device 11, the left camera 12, the right camera 13, the GNSS device 14, and the memory card 15 are mounted in an aircraft (moving body) 2.

The aircraft 2 only needs to be able to fly with the distance measuring device 11, the left camera 12, the right camera 13, the GNSS device 14, and the memory card 15 being mounted therein. The aircraft 2 may be the one steered by a pilot on board or an unmanned aerial vehicle (UAV).

Further, the attitude of the aircraft 2 is specified by the following three parameters: a roll angle co, a pitch angle $\varphi$, and a yaw angle $\kappa$ which are attitude angles in a rolling direction, a pitching direction, and a yawing direction of the aircraft 2.

The distance measuring device 11 measures a distance 1 from an irradiation reference point of a laser beam to a distance measurement point P by transmitting and receiving the laser beam to and from a ground surface while changing an irradiation angle $\theta$ of the laser beam during flight of the aircraft 2. Then, the distance measuring device 11 outputs, for each distance measurement point P, distance data indicating the distance 1 and angle data indicating the irradiation angle $\theta$ of the laser beam at which the distance 1 is obtained, to the memory card 15.

The left camera 12 and the right camera 13 shoot an area (ground surface) including the distance measurement point P for the distance measuring device 11 while the aircraft 2 is flying. A control device (not shown) that controls the left camera 12 and the right camera 13 is connected to the left camera 12 and the right camera 13. For example, the control device instructs the left camera 12 and the right camera 13 to shoot the ground surface at a predetermined cycle (for example, every second). Then, the control device outputs to the memory card 15 image data in which images obtained by the left camera 12 and the right camera 13 are associated with their respective shooting dates and times. The left camera 12, the right camera 13, and the control device constitute a shooting device.

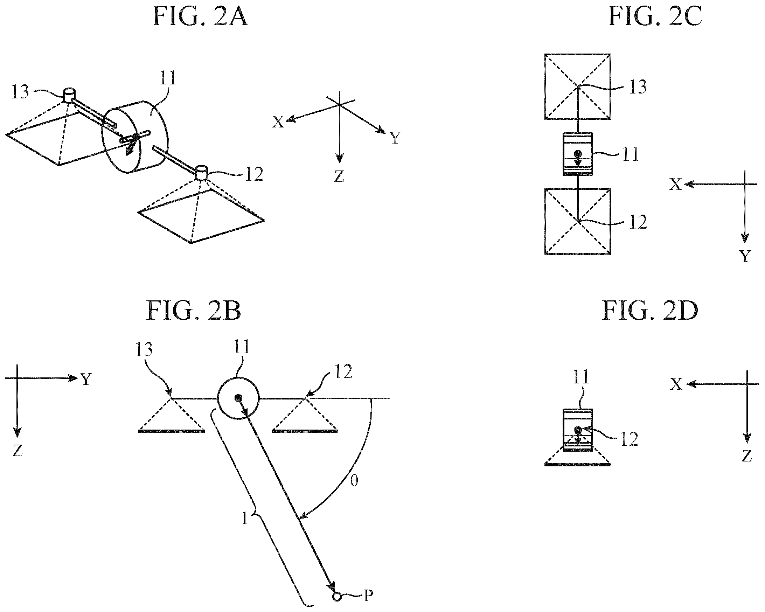

FIG. 2 schematically shows the positional relationship among the distance measuring device 11, the left camera 12, and the right camera 13.

Although the example in which two cameras (the left camera 12 and the right camera 13) are used is described here, it is not limited thereto, and only one camera may be used.

The GNSS device 14 measures three-dimensional coordinates (Xo, Yo, Zo) of the irradiation reference point of the laser beam in the distance measuring device 11 at a predetermined cycle. Then, the GNSS device 14 outputs coordinate data indicating the three-dimensional coordinates (Xo, Yo, Zo) of the irradiation reference point of the laser beam to the memory card 15. For example, the GNSS device 14 measures the three-dimensional coordinates (Xo, Yo, Zo) of the irradiation reference point of the laser beam in synchronization with the shooting operation performed by the left camera 12 and the right camera 13.

It is assumed that the difference in position between the GNSS device 14 and the irradiation reference point is within an allowable range with respect to the measurement accuracy of the GNSS device 14. That is, the GNSS device 14 is assumed to be at the same position as the irradiation reference point. Further, the position of the irradiation reference point has the same meaning as the position of the aircraft 2.

The memory card 15 stores distance data and angle data output from the distance measuring device 11, image data output from the shooting device, and coordinate data output from the GNSS device 14. As the memory card 15, a secure digital (SD) memory card can be used, for example.

The data thinning device 16 thins out data unnecessary for estimating the attitude of the moving body from the abovementioned data on the basis of the data stored in the memory card 15 and the attitude angles ($\omega$, $\varphi$, $\kappa$) of the aircraft 2 set by the navigation device 17. The data thinning device 16 then outputs data obtained by thinning unnecessary data to the navigation device 17. Although FIG. 1 shows the case in which the data thinning device 16 is provided outside the aircraft 2, it is not limited thereto, and the data thinning device 16 may be mounted in the aircraft 2. A configuration example of the data thinning device 16 will be described later.

The navigation device 17 estimates the attitude of the aircraft 2 using the data output from the data thinning device 16, and sets the attitude angles ($\omega$, $\varphi$, $\kappa$) of the aircraft 2. Note that an initial value is set for the attitude angles ($\omega$, $\varphi$, $\kappa$) of the aircraft 2 for the first time. Note that an existing device (for example, Patent Literature 1) can be used for the navigation device 17, and the description of the configuration and operation thereof will be omitted. Although FIG. 1 shows the case in which the navigation device 17 is provided outside the aircraft 2, it is not limited thereto, and the navigation device 17 may be mounted in the aircraft 2.

The data thinning device 16 and the navigation device 17 constitute a surveying device. Further, the data thinning device 16 and the navigation device 17 may be mounted on the same hardware, and the functions of both the data thinning device 16 and the navigation device 17 may be implemented by the hardware.

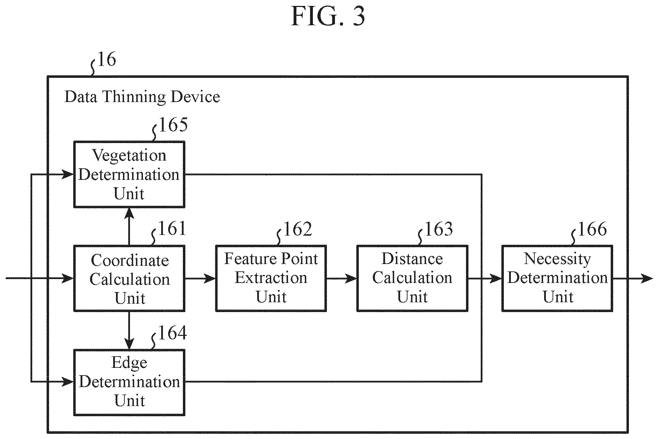

Next, a configuration example of the data thinning device 16 will be described with reference to FIG. 3.

As shown in FIG. 3, the data thinning device 16 includes a coordinate calculation unit 161, a feature point extraction unit 162, a distance calculation unit 163, an edge determination unit 164, a vegetation determination unit 165, and a necessity determination unit 166.

On the basis of the data (distance data, angle data, and coordinate data) related to the plurality of distance measurement points P read from the memory card 15 and the attitude angles ($\omega$, $\varphi$, $\kappa$) of the aircraft 2, the coordinate calculation unit 161 calculates coordinates ($x_L$, $y_L$) of each of the distance measurement points P on the corresponding image among the images included in the plurality of pieces of image data read from the memory card 15. The image corresponding to the distance measurement point P indicates an image shot at a time closer to (normally, closest to) the irradiation time at which the distance measurement point P is irradiated with the laser beam. Further, regarding the attitude angles ($\omega$, $\varphi$, $\kappa$) of the aircraft 2, the latest values set by the navigation device 17 are used. During the above process, on the basis of the distance data, the angle data, the coordinate data, and the attitude angles ($\omega$, $\varphi$, $\kappa$) of the aircraft 2, the coordinate calculation unit 161 first calculates, for each distance measurement point P, the three-dimensional coordinates (X, Y, Z) of the corresponding distance measurement point P. Then, on the basis of the coordinate data and the attitude angles ($\omega$, $\varphi$, $\kappa$) of the aircraft 2, the coordinate calculation unit 161 calculates projection center coordinates ($X_L$, $Y_L$, $Z_L$) of each of the left camera 12 and the right camera 13 that captures the corresponding image. Then, on the basis of the attitude angles ($\omega$, $\varphi$, $\kappa$) of the aircraft 2, the three-dimensional coordinates (X, Y, Z) of each measurement point P, and the projection center coordinates ($X_L$, $Y_L$, $Z_L$) of each of the left camera 12 and the right camera 13 that captures the corresponding image, the coordinate calculation unit 161 calculates the coordinates ($x_L$, $y_L$) of each distance measurement point P on the corresponding image.

Note that the coordinates ($x_L$, $y_L$) indicate coordinates when the attitude angles ($\omega$, $\varphi$, $\kappa$) are considered to be completely match those of the actual attitude of the aircraft 2.

The feature point extraction unit 162 extracts feature points for each image included in the plurality of pieces of image data read from the memory card 15. FIG. 3 shows a case where the feature point extraction unit 162 acquires the image data from the memory card 15 via the coordinate calculation unit 161. For the feature point extraction by the feature point extraction unit 162, features such as scale-invariant feature transform (SIFT) or SURF that do not depend on rotation and scale conversion are used.

The distance calculation unit 163 calculates, for each distance measurement point P, in the corresponding image, the distance to the nearby (usually, the nearest) feature point among the feature points extracted by the feature point extraction unit 162, on the basis of the coordinates ($x_L$, $y_L$) calculated by the coordinate calculation unit 161. FIG. 3 shows a case where the distance calculation unit 163 acquires data indicating the coordinates ($x_L$, $y_L$) from the coordinate calculation unit 161 via the feature point extraction unit 162.

The edge determination unit 164 determines, for each distance measurement point P, whether the coordinates ($x_L$, $y_L$) calculated by the coordinate calculation unit 161 in the corresponding image indicate a point at which an edge portion of an object (building, etc.) is observed. During this process, on the basis of the temporal continuity of the coordinates ($x_L$, $y_L$) of the distance measurement point P, the edge determination unit 164 calculates the edge strength at the coordinates ($x_L$, $y_L$), for example.

The vegetation determination unit 165 determines, for each distance measurement point P, whether the coordinates ($x_L$, $y_L$) calculated by the coordinate calculation unit 161 in the corresponding image indicate a point at which vegetation is observed. During this process, on the basis of the reflection luminance at the coordinates ($x_L$, $y_L$) of the distance measurement point P, the vegetation determination unit 165 calculates the probability that the coordinates ($x_L$, $y_L$) indicate the point at which vegetation is observed, for example.

On the basis of the calculation result by the distance calculation unit 163, the determination result by the edge determination unit 164, and the determination result by the vegetation determination unit 165, the necessity determination unit 166 deletes unnecessary data from the data (distance data, angle data, and coordinate data) related to the distance measurement point P read from the memory card 15. During this process, on the basis of the calculation result by the distance calculation unit 163, the determination result by the edge determination unit 164, and the determination result by the vegetation determination unit 165, the necessity determination unit 166 calculates, for each distance measurement point P, an evaluation value for determining necessity. Then, the necessity determination unit 166 divides the image in line with a preset thinning number, and selects, for each of the divided areas, a distance measurement point P having a low (normally, the lowest) calculated evaluation value. Then, the necessity determination unit 166 regards the data related to the selected distance measurement point P as necessary data, and deletes the data related to a distance measurement point P that is not selected as unnecessary data.

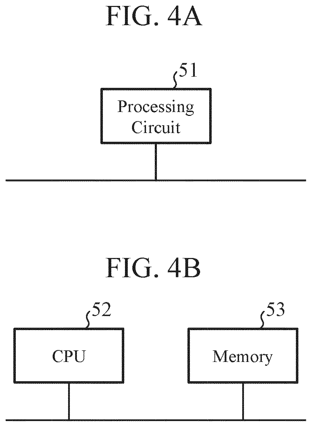

FIG. 4 is a block diagram showing a hardware configuration example of the data thinning device 16.

The functions of the coordinate calculation unit 161, the feature point extraction unit 162, the distance calculation unit 163, the edge determination unit 164, the vegetation determination unit 165, and the necessity determination unit 166 in the data thinning device 16 are implemented by a processing circuit 51. The processing circuit 51 may be dedicated hardware as shown in FIG. 4A, or a central processing unit (CPU) (or may be referred to as processing unit, computing unit, microprocessor, microcomputer, processor, or digital signal processor (DSP)) 52 that executes a program stored in the memory 53 as shown in FIG. 4B.

When the processing circuit 51 is dedicated hardware, the processing circuit 51 is, for example, a single circuit, a composite circuit, a programmed processor, a parallel programmed processor, an application specific integrated circuit (ASIC), a field-programmable gate array (FPGA), or a combination of some of these circuits. The functions of the coordinate calculation unit 161, the feature point extraction unit 162, the distance calculation unit 163, the edge determination unit 164, the vegetation determination unit 165, and the necessity determination unit 166 may be implemented by respective processing circuits 51, or may be collectively implemented by a single processing circuit 51.

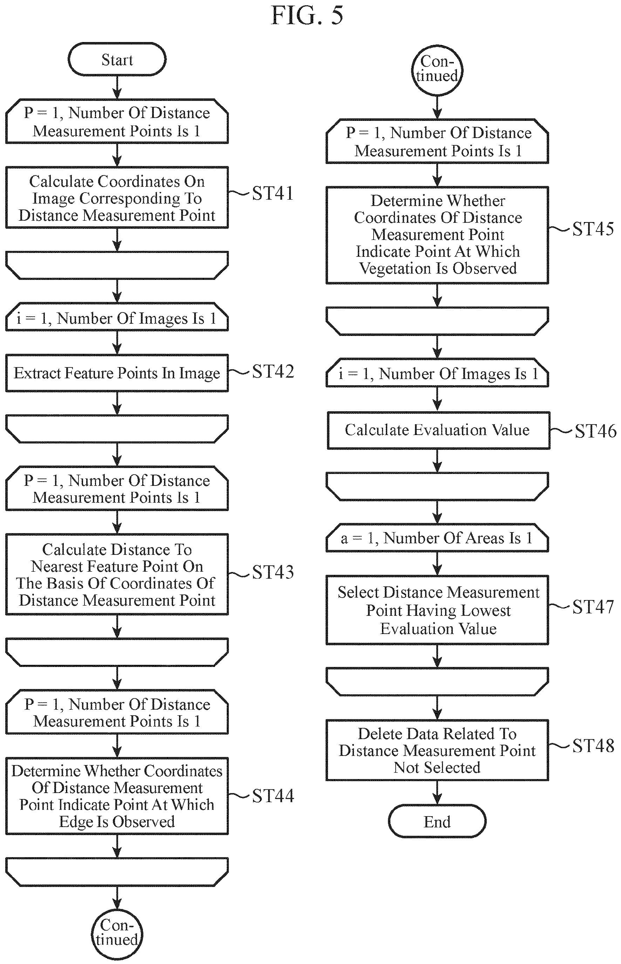

When the processing circuit 51 is the CPU 52, the functions of the coordinate calculation unit 161, the feature point extraction unit 162, the distance calculation unit 163, the edge determination unit 164, the vegetation determination unit 165, and the necessity determination unit 166 are implemented by software, firmware, or a combination of software and firmware. Software and firmware are described as programs and stored in the memory 53. The processing circuit 51 implements the functions of the respective units by reading and executing programs stored in the memory 53. That is, the data thinning device 16 includes the memory 53 for storing a program that when executed by the processing circuit 51, results in, for example, execution of each step shown in FIG. 5. In addition, these programs cause the computer to execute the procedures and methods of the coordinate calculation unit 161, the feature point extraction unit 162, the distance calculation unit 163, the edge determination unit 164, the vegetation determination unit 165, and the necessity determination unit 166. Here, the memory 53 is, for example, a nonvolatile or volatile semiconductor memory such as a random access memory (RAM), a read only memory (ROM), a flash memory, an erasable programmable ROM (EPROM), or an electrically EPROM (EEPROM), a magnetic disk, a flexible disk, an optical disk, a compact disk, a mini disk, or a digital versatile disc (DVD).

Note that some of the functions of the coordinate calculation unit 161, the feature point extraction unit 162, the distance calculation unit 163, the edge determination unit 164, the vegetation determination unit 165, and the necessity determination unit 166 may be implemented by dedicated hardware, and some of the functions may be implemented by software or firmware. For example, it is possible to implement the function of the coordinate calculation unit 161 by the processing circuit 51 which is dedicated hardware, and to implement the functions of the feature point extraction unit 162, the distance calculation unit 163, the edge determination unit 164, the vegetation determination unit 165, and the necessity determination unit 166 by the processing circuit 51 reading and executing the programs stored in the memory 53.

As described above, the processing circuit 51 can implement the abovementioned functions by hardware, software, firmware, or a combination thereof.

Next, an operation example of the data thinning device 16 according to the first embodiment will be described with reference to FIG. 5. FIG. 5 shows a series of processing from when the data thinning device 16 acquires data from the memory card 15 mounted in the flying aircraft 2 until the data thinning device 16 delivers data to the navigation device 17. A case in which only one camera (left camera 12) is used is described below.

In the operation example of the data thinning device 16, the coordinate calculation unit 161 first calculates, on the basis of the data (distance data, angle data, and coordinate data) related to the distance measurement point P read from the memory card 15 and the attitude angles ($\omega$, $\varphi$, $\kappa$) of the aircraft 2, the coordinates ($x_L$, $y_L$) on the image corresponding to the distance measurement point P among the images included in the plurality of pieces of image data read from the memory card 15 (step ST41), as shown in FIG. 5.

During this process, the coordinate calculation unit 161 first calculates the three-dimensional coordinates (X, Y, Z) of the distance measurement point P, on the basis of the distance data, the angle data, the coordinate data, and the attitude angles ($\omega$, $\varphi$, $\kappa$) of the aircraft 2, in accordance with the following equation (1).

$$\begin{pmatrix} X \\ Y \\ Z \end{pmatrix} = R_t \begin{pmatrix} 0 \\ l\cos\theta \\ l\sin\theta \end{pmatrix} + \begin{pmatrix} X_0 \\ Y_0 \\ Z_0 \end{pmatrix} \qquad (1)$$

In the equation (1), Rt is an element of a 3 × 3 rotation matrix that represents the inclination of the distance measuring device 11 and the left camera 12 based on the attitude of the aircraft 2. Rt is expressed by the following equation (2) using the attitude angles ($\omega(t)$, $\varphi(t)$, $\kappa(t)$) of the aircraft 2 at a time t.

$$R_t = \begin{pmatrix} a_{11} & a_{12} & a_{13} \\ a_{21} & a_{22} & a_{23} \\ a_{31} & a_{32} & a_{33} \end{pmatrix} = \begin{pmatrix} \cos\kappa & -\sin\kappa & 0 \\ \sin\kappa & \cos\kappa & 0 \\ 0 & 0 & 1 \end{pmatrix} \begin{pmatrix} \cos\varphi & 0 & \sin\varphi \\ 0 & 1 & 0 \\ -\sin\varphi & 0 & \cos\varphi \end{pmatrix} \begin{pmatrix} 1 & 0 & 0 \\ 0 & \cos\omega & -\sin\omega \\ 0 & \sin\omega & \cos\omega \end{pmatrix} \quad (2)$$

Then, the coordinate calculation unit 161 calculates the projection center coordinates ($X_L$, $Y_L$, $Z_L$) of the left camera 12 that captures the image corresponding to the distance measurement point P, in accordance with the following equation (3), on the basis of the coordinate data and the attitude angles ($\omega$, $\varphi$, $\kappa$) of the aircraft 2. In the equation (3), $R_{imgt}$ is a rotation matrix calculated from the attitude angles ($\omega$, $\varphi$, $\kappa$) of the aircraft 2 at the shooting time closest to the irradiation time at which the distance measurement point P is irradiated with the laser beam.

$$\begin{pmatrix} X_L \\ Y_L \\ Z_L \end{pmatrix} = R_{imgt} \begin{pmatrix} 0 \\ -1.0 \\ 0 \end{pmatrix} + \begin{pmatrix} X_0 \\ Y_0 \\ Z_0 \end{pmatrix} \qquad (3)$$

Then, the coordinate calculation unit 161 calculates, on the basis of the attitude angles ($\omega$, $\varphi$, $\kappa$) of the aircraft 2, the three-dimensional coordinates (X, Y, Z) of the measurement point P, and the projection center coordinates ($X_L$, $Y_L$, $Z_L$) of the left camera 12 that captures the image corresponding to the distance measurement point P, the coordinates ($x_L$, $y_L$) of the distance measurement point P on the corresponding image in accordance with the following equation (4). In the equation (4), c is the focal length of the left camera 12. Further, $U_L$, $V_L$, and $W_L$ in the equation (4) are represented by the following equation (5), and bn to $b_{33}$ in the equation (5) are represented by the following equation (6).

$$x_L = -c\frac{U_L}{W_L} \quad y_L = -c\frac{V_L}{W_L} \qquad (4)$$

$$\begin{aligned} U_L &= b_{11}(X - X_L) + b_{12}(Y - Y_L) + b_{13}(Z - Z_L) \\ V_L &= b_{21}(X - X_L) + b_{22}(Y - Y_L) + b_{23}(Z - Z_L) \\ W_L &= b_{31}(X - X_L) + b_{32}(Y - Y_L) + b_{33}(Z - Z_L) \end{aligned} \qquad (5)$$

$$\begin{pmatrix} b_{11} & b_{12} & b_{13} \\ b_{21} & b_{22} & b_{23} \\ b_{31} & b_{32} & b_{33} \end{pmatrix}$$

$$= \begin{pmatrix} 1 & 0 & 0 \\ 0 & \cos(-\omega) & -\sin(-\omega) \\ 0 & \sin(-\omega) & \cos(-\omega) \end{pmatrix} \begin{pmatrix} \cos(-\varphi) & 0 & \sin(-\varphi) \\ 0 & 1 & 0 \\ -\sin(-\varphi) & 0 & \cos(-\varphi) \end{pmatrix} \begin{pmatrix} \cos(-\kappa) & -\sin(-\kappa) & 0 \\ \sin(-\kappa) & \cos(-\kappa) & 0 \\ 0 & 0 & 1 \end{pmatrix} \quad (6)$$

The coordinate calculation unit 161 performs the above process for all the distance measurement points P.

Then, the feature point extraction unit 162 extracts feature points from the image included in the image data read from the memory card 15 (step ST42). During this process, the feature point extraction unit 162 may extract the feature points after reducing the input image to about 1/4, in order to shorten the processing time. The feature point extraction unit 162 performs the above process on images included in all pieces of image data.

Next, the distance calculation unit 163 calculates, in the image corresponding to the distance measurement point P, the distance to the nearest feature point among the feature points extracted by the feature point extraction unit 162, on the basis of the coordinates $(x_L, y_L)$ calculated by the coordinate calculation unit 161 (step ST43). The distance calculation unit 163 performs the above process for all the distance measurement points P.

The edge determination unit 164 determines whether the coordinates $(x_L, y_L)$ of the distance measurement point P calculated by the coordinate calculation unit 161 in the image corresponding to the distance measurement point P indicate a point at which an edge portion of an object (building, etc.) is observed (step ST44). During this process, the edge determination unit 164 calculates, for example, the steepness (edge strength) of the change in the measured distance values around the coordinates $(x_L, y_L)$ of the distance measurement point P, using central difference or the Sobel operator. Further, the edge determination unit 164 may calculate the edge strength by detecting an edge portion from the image. The edge determination unit 164 performs the above process for all the distance measurement points P.

The vegetation determination unit 165 determines whether the coordinates $(x_L, y_L)$ calculated by the coordinate calculation unit 161 in the image corresponding to the distance measurement point P indicate a point at which vegetation is observed (step ST45). During this process, the vegetation determination unit 165 sets the probability of 1 (vegetation is observed) when the reflection luminance at the coordinates $(x_L, y_L)$ of the distance measurement point P is less than a threshold, and sets the probability of 0 (vegetation is not observed) when the reflection luminance is equal to or greater than the threshold, for example. The vegetation determination unit 165 performs the above process for all the distance measurement points P.

Next, the necessity determination unit 166 calculates an evaluation value for determining necessity for the distance measurement point P, on the basis of the calculation result by the distance calculation unit 163, the determination result by the edge determination unit 164, and the determination result by the vegetation determination unit 165 (step ST46). During this process, the necessity determination unit 166 calculates the evaluation value using a weighted sum of the distance calculated by the distance calculation unit 163, the edge strength determined by the edge determination unit 164, and the probability of vegetation determined by the vegetation determination unit 165. The necessity determination unit 166 performs the above process for all the distance measurement points P.

Next, the necessity determination unit 166 divides the image in line with a preset thinning number, and selects, for each of the divided areas, the distance measurement point P having the lowest calculated evaluation value (step ST47).

Then, the necessity determination unit 166 regards the data related to the selected distance measurement point P as necessary data, and deletes the data related to the distance measurement point P that is not selected as unnecessary data (step ST48). That is, the necessity determination unit 166 regards the data related to the distance measurement point P distant from the feature points as unnecessary data, because the feature points in the image are useful for topographic survey. In addition, the necessity determination unit 166 regards the data related to the distance measurement point P having a high edge strength as unnecessary data, because the distance measured by the distance measuring device 11 is not stable at the edge portion of the object. In the vegetation region, the distance measuring device 11 measures the distance to the ground because the laser beam passes through the leaves of trees. However, the left camera 12 shoots the trees, and therefore, cannot observe the same point. Therefore, the necessity determination unit 166 regards data relating to the distance measurement point P having a high probability that the vegetation is observed as unnecessary data.

In the above description, the data thinning device 16 includes all of the distance calculation unit 163, the edge determination unit 164, and the vegetation determination unit 165. However, it is not limited thereto, and the data thinning device 16 may include one or more of the distance calculation unit 163, the edge determination unit 164, and the vegetation determination unit 165. The order of importance is the distance calculation unit 163, the edge determination unit 164, and the vegetation determination unit 165 in descending order.

As described above, according to the first embodiment, it is provided with: the coordinate calculation unit 161 for, on the basis of data which is related to a plurality of distance measurement points P and which indicates distances to and angles of the respective distance measurement points P measured by the distance measuring device 11 mounted in the aircraft 2 using a laser beam and indicates coordinates of an irradiation reference point of the laser beam measured by the GNSS device 14 mounted in the aircraft 2, and on the basis of the attitude angle of the aircraft 2, calculating coordinates of each of the distance measurement points P on a corresponding image among a plurality of images obtained in such a way that an area including the distance measurement points P is periodically shot by the camera 12 or 13 mounted in the aircraft 2; the feature point extraction unit 162 for extracting feature points for each of the images; the distance calculation unit 163 for calculating, for each of the distance measurement points P, in the corresponding image, a distance to a nearby feature point among the feature points extracted by the feature point extraction unit 162, on the basis of the coordinates calculated by the coordinate calculation unit 161; and the necessity determination unit 166 for deleting unnecessary data from the data related to the distance measurement points P on the basis of the calculation result by the distance calculation unit 163. Accordingly, the data used for estimating the attitude of the aircraft 2 can be thinned out. Specifically, in the surveying system 1, the data thinning device 16 can output data to the subsequent navigation device 17 after deleting the data related to distance measurement points p which deteriorates the measurement accuracy. As a result, the accuracy of estimating the attitude of the aircraft 2 in the navigation device 17 can be improved. In addition, the calculation speed in the navigation device 17 is expected to be increased by thinning out the extra distance measurement points p.

It is to be noted that, in the present invention, any component in the embodiment can be modified or omitted within the scope of the invention.

INDUSTRIAL APPLICABILITY

The data thinning device according to the present invention can thin out data used for estimating the attitude of a moving body, and thus, is suitable for use in estimating the attitude of the moving body.

REFERENCE SIGNS LIST

1: Surveying system, 2: Aircraft (moving body), 11: Distance measuring device, 12: Left camera, 13: Right camera, 14: GNSS device (coordinate measuring device), 15: Memory card (storage device), 16: Data thinning device, 17: Navigation device, 51: Processing circuit, 52: CPU, 53: Memory, 161: Coordinate calculation unit, 162: Feature point extraction unit, 163: Distance calculation unit, 164: Edge determination unit, 165: Vegetation determination unit, 166: Necessity determination unit.

## Claims

1. A data thinning device comprising:

   a coordinate calculation unit for, on a basis of data which is related to a plurality of distance measurement points and which indicates distances to and angles of the respective distance measurement points measured by a distance measuring device mounted in a moving body using a laser beam and indicates coordinates of an irradiation reference point of the laser beam measured by a coordinate measuring device mounted in the moving body, and on a basis of an attitude angle of the moving body, calculating coordinates of each of the distance measurement points on a corresponding image among a plurality of images obtained in such a way that an area including the distance measurement points is periodically shot by a shooting device mounted in the moving body;
   a feature point extraction unit for extracting feature points for each of the images;
   a distance calculation unit for calculating, for each of the distance measurement points, in the corresponding image, a distance to a nearby feature point among the feature points extracted by the feature point extraction unit, on a basis of the coordinates calculated by the coordinate calculation unit; and
   a necessity determination unit for deleting unnecessary data from the data related to the distance measurement points on a basis of a calculation result by the distance calculation unit.

2. The data thinning device according to claim 1, further comprising
   an edge determination unit for determining, for each of the distance measurement points, in the corresponding image, whether the coordinates calculated by the coordinate calculation unit indicate a point at which an edge portion of an object is observed,
   wherein the necessity determination unit deletes unnecessary data from the data related to the distance measurement points on a basis of a determination result by the edge determination unit.

3. The data thinning device according to claim 1 or 2, further comprising
   a vegetation determination unit for determining, for each of the distance measurement points, in the corresponding image, whether the coordinates calculated by the coordinate calculation unit indicate a point at which vegetation is observed,
   wherein the necessity determination unit deletes unnecessary data from the data related to the distance measurement points on a basis of a determination result by the vegetation determination unit.

4. A surveying device comprising:

a coordinate calculation unit for, on a basis of data which is related to a plurality of distance measurement points and which indicates distances to and angles of the respective distance measurement points measured by a distance measuring device mounted in a moving body using a laser beam and indicates coordinates of an irradiation reference point of the laser beam measured by a coordinate measuring device mounted in the moving body, and on a basis of an attitude angle of the moving body, calculating coordinates of each of the distance measurement points on a corresponding image among a plurality of images obtained in such a way that an area including the distance measurement points is periodically shot by a shooting device mounted in the moving body;

a feature point extraction unit for extracting feature points for each of the images;

a distance calculation unit for calculating, for each of the distance measurement points, in the corresponding image, a distance to a nearby feature point among the feature points extracted by the feature point extraction unit, on a basis of the coordinates calculated by the coordinate calculation unit;

a necessity determination unit for deleting unnecessary data from the data related to the distance measurement points on a basis of a calculation result by the distance calculation unit; and

a navigation device for setting an attitude angle of the moving body using the data related to the distance measurement points from which the unnecessary data is deleted by the necessity determination unit.

5. A surveying system comprising:

a distance measuring device mounted in a moving body, for measuring distances to and angles of a respective plurality of distance measurement points using a laser beam;

a coordinate measuring device mounted in the moving body, for measuring coordinates of an irradiation reference point of the laser beam;

a shooting device mounted in the moving body, for obtaining images by periodically shooting an area including the distance measurement points;

a coordinate calculation unit for, on a basis of data which is related to the distance measurement points and which indicates distances to and angles of the respective distance measurement points measured by the distance measuring device and indicates the coordinates measured by the coordinate measuring device, and on a basis of an attitude angle of the moving body, calculating coordinates of each of the distance measurement points on a corresponding image among the images obtained by the shooting device;

a feature point extraction unit for extracting feature points for each of the images,

a distance calculation unit for calculating, for each of the distance measurement points, in the corresponding image, a distance to a nearby feature point among the feature points extracted by the feature point extraction unit, on a basis of the coordinates calculated by the coordinate calculation unit;

a necessity determination unit for deleting unnecessary data from the data related to the distance measurement points on a basis of a calculation result by the distance calculation unit; and

a navigation device for setting an attitude angle of the moving body using the data related to the distance measurement points from which the unnecessary data is deleted by the necessity determination unit.

6. A data thinning method comprising:

a step of, by a coordinate calculation unit, on a basis of data which is related to a plurality of distance measurement points and which indicates distances to and angles of the respective distance measurement points measured by a distance measuring device mounted in a moving body using a laser beam and indicates coordinates of an irradiation reference point of the laser beam measured by a coordinate measuring device mounted in the moving body, and on a basis of an attitude angle of the moving body, calculating coordinates of each of the distance measurement points on a corresponding image among a plurality of images obtained in such a way that an area including the distance measurement points is periodically shot by a shooting device mounted in the moving body;

a step of, by a feature point extraction unit, extracting feature points for each of the images;

a step of, by a distance calculation unit, calculating, for each of the distance measurement points, in the corresponding image, a distance to a nearby feature point among the feature points extracted by the feature point extraction unit, on a basis of the coordinates calculated by the coordinate calculation unit; and

a step of, by a necessity determination unit, deleting unnecessary data from the data related to the distance measurement points on a basis of a calculation result by the distance calculation unit.

# FIG. 1

## FIG. 2A

## FIG. 2B

## FIG. 2C

## FIG. 2D

# FIG. 3

Data Thinning Device — 16

165
Vegetation Determination Unit

161
Coordinate Calculation Unit

162
Feature Point Extraction Unit

163
Distance Calculation Unit

166
Necessity Determination Unit

164
Edge Determination Unit

FIG. 4A

51

Processing
Circuit

FIG. 4B

52

CPU

53

Memory

# FIG. 5

Start

P = 1, Number Of Distance Measurement Points Is 1

Calculate Coordinates On Image Corresponding To Distance Measurement Point —ST41

i = 1, Number Of Images Is 1

Extract Feature Points In Image —ST42

P = 1, Number Of Distance Measurement Points Is 1

Calculate Distance To Nearest Feature Point On The Basis Of Coordinates Of Distance Measurement Point —ST43

P = 1, Number Of Distance Measurement Points Is 1

Determine Whether Coordinates Of Distance Measurement Point Indicate Point At Which Edge Is Observed —ST44

Con-tinued

Con-tinued

P = 1, Number Of Distance Measurement Points Is 1

Determine Whether Coordinates Of Distance Measurement Point Indicate Point At Which Vegetation Is Observed —ST45

i = 1, Number Of Images Is 1

Calculate Evaluation Value —ST46

a = 1, Number Of Areas Is 1

Select Distance Measurement Point Having Lowest Evaluation Value —ST47

Delete Data Related To Distance Measurement Point Not Selected —ST48

End

**EP 3 637 048 A1**

<table>
<tr><td colspan="3" align="center"><b>INTERNATIONAL SEARCH REPORT</b></td><td>International application No.<br>PCT/JP2018/012928</td></tr>
</table>

**A. CLASSIFICATION OF SUBJECT MATTER**
Int.Cl. G01C7/04(2006.01)i, G01C15/00(2006.01)i

According to International Patent Classification (IPC) or to both national classification and IPC

**B. FIELDS SEARCHED**

Minimum documentation searched (classification system followed by classification symbols)
Int.Cl. G01C1/00-1/14, 5/00-15/14, G01B11/00-11/30, G05D1/08

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 6029794 B1 (MITSUBISHI ELECTRIC CORP.) 24 November 2016, paragraphs [0001]–[0070], fig. 1–22 & WO 2017/042907 A1 | 1, 4–6<br>2–3 |
| Y<br>A | JP 2008-89314 A (TOPCON CORPORATION) 17 April 2008, paragraphs [0028]–[0063], [0080]–[0084], fig. 1–12, 15–18 & US 2008/0095402 A1, paragraphs [0063]–[0125], [0129]–[0133], fig. 1–12, 15–18 & EP 1906140 A2 | 1, 4–6<br>2–3 |
| A | US 2013/0188841 A1 (POLLOCK, Richard James) 25 July 2013, paragraphs [0029]–[0039], fig. 1 & US 2014/0232718 A1 & US 2015/0254901 A1 & WO 2013/106920 A1 & CA 2861555 A1 | 1–6 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 May 2018 (08.05.2018) | Date of mailing of the international search report<br>22 May 2018 (22.05.2018) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**EP 3 637 048 A1**

REFERENCES CITED IN THE DESCRIPTION

**Patent documents cited in the description**

- JP 6029794 B